# EUROPEAN PATENT SPECIFICATION

(11) **EP 3 082 644 B1**
(45) Date of publication and mention of the grant of the patent: **06.09.2017**
(21) Application number: 14830850.5
(22) Date of filing: 17.12.2014
(51) Int. Cl.: A61C 13/00, A61C 13/01

(54) **DENTAL FRAMEWORKS AND RELATED APPARATUS AND METHODS**
DENTALE RAHMEN UND ZUGEHÖRIGE VORRICHTUNG UND VERFAHREN
STRUCTURES DENTAIRES, APPAREIL ET PROCÉDÉS ASSOCIÉS

(30) Priority: 19.12.2013 GB 201322508; 06.01.2014 GB 201400129
(43) Date of publication of application: 26.10.2016
(73) Proprietor: Juvora Limited, Cleveleys, Lancashire FY5 4QD (GB)
(72) Inventor: SERENO, Nuno, Southport Merseyside PR8 5BZ (GB); JARMAN-SMITH, Marcus, Lytham St. Annes Merseyside FY8 2EA (GB); LOBENHOFER, Reinhard, 90455 Nuernberg (DE)
(74) Representative: Thompson, Nicola Ruth
(86) International application number: PCT/GB2014/053727
(87) International publication number: WO 2015/092391

(56) References cited:
- EP-A2- 0 917 860
- GB-A- 2 488 111
- GB-A- 2 496 981
- US-A1- 2004 241 614

## Description

The invention is as defined in the appended claims.

This disclosure relates to prosthodontics devices in the form of dental frameworks, in particular to methods of making and repairing dental frameworks such as dentures including tooth prostheses, in particular by means of ultrasonic welding. The disclosure also relates to methods and apparatus for forming dental prosthetic items such as dental frameworks, repair portions for dental frameworks, tooth prostheses and the like. In particular, aspects of the disclosure relate to methods and apparatus for compressive moulding of PAEK (polyaryletherketone) to form prosthodontic items such as repair portions.

Prosthodontics is concerned with treatments to address missing or deficient teeth in patients.

A type of prosthodontic device is arranged to a replace a patient's missing teeth and contiguous tissue with a prosthesis which is designed to be removed by a wearer, for example nightly. Such removable prostheses, also referred to as dentures herein, may comprise removable partial or whole prosthodontic devices which cooperate with a patient's gums and palate, and with natural remaining teeth (or with other implants) to define partial or complete prosthetic dentition.

Such dentures also may also include teeth prostheses which are located in the dental framework in order to form a denture which may be removably worn by a patent with hard wearing prosthetic teeth having a natural appearance. EP0917860 and GB2496981 disclose prosthodontic devices.

There are many different types of prosthodontic devices and methods of making such devices. For example, removable prosthodontic devices may comprise a metal framework (e.g. of cobalt/chrome) in combination with cast or moulded plastics parts. However, disadvantageously, such devices may be heavy, difficult to manufacture to produce an accurate mouth-fit, and have high stiffness and poor load distribution, leading to patient discomfort. Additionally, use of metal may result in relatively high levels of metal ions being introduced into patients' bodies over time. Furthermore, some patients are allergic to metals used in the devices. In addition, manufacture of existing prosthodontic devices, or those which include a combination of metal and plastics, can be time-consuming; and such devices may be aesthetically unattractive.

A problem with tooth prostheses is to provide a tooth prosthesis which is natural in appearance, is hard wearing, is easily formed into a desired shape and yet which is also light and easily attached to either a dental framework or directly to the jaw of a patient. Typically, tooth prostheses have been made from a core of metal or ceramic material, or from a cast resin material such as acrylic resin, prepared from in-situ reaction of monomers upon moulding, with a dental veneer bonded to the outer face of the core in order to form a crown. It is important that the dental veneer is strongly bonded to the underlying core and remains strongly bonded even after prolonged immersion in the fluids found in the mouth.

The presence of metals, or of trace amounts of reactive monomers, in the mouth of a patient are undesirable. It is also desirable to have cores for tooth prostheses which are easily shaped in-situ in a dental surgery, yet which may be strongly bonded to a dental veneer in order to form a crown. It is also desirable to have tooth prostheses which are easily bonded to a dental framework in order to make a removable denture. It is also desirable to have tooth prostheses which are not so excessively rigid that they cause risk of damage to opposing teeth of a patient in use. It is also desirable to have tooth prostheses which are of low weight.

It has been found that PAEK polymer, also including PEEK (polyetheretherketone) polymer, is useful for the formation of both dental frameworks and tooth prostheses. Prosthodontic devices formed from PAEK polymers are the subject of a number of co-pending applications. Typically, the preparation of prosthodontic items from PAEK may require the use of computer-aided machining to prepare the item by shaping a block of polymeric PAEK, for instance by means of computer-aided milling.

For rapid repair and formation of prosthodontic items, for instance to provide temporary and/or rapid repair to a patients dental features, it is desirable to be able to provide methods and apparatus that may enable a dentist to rapidly prepare prosthodontic items, either with or without need for recourse to complex computer-aided milling apparatus, for instance whilst a patient is waiting, on site, for a repair to be effected. The use of reactive monomers to provide a flowable resin which can be moulded into the shape of a dental prosthesis, and subsequently solidified by polymerisation of the monomers, is undesirable as it has the disadvantage that it entails the handling of reactive monomers and there is the risk of unreacted monomer remaining after solidification of the dental prosthetic item.

It is one aim of the present disclosure, amongst others, to provide tooth prostheses, dentures and methods which address, obviate or at least partially mitigate at least some of the problems or disadvantages in the prior art, whether identified herein or elsewhere. In particular, it is one aim of the disclosure, amongst others, to provide a method of joining portions of a dental framework to form an integrated dental framework. It is an aim of the present disclosure, amongst others, to provide methods and apparatus for forming easily, safely and rapidly forming prosthodontic items which address, obviate or at least partially mitigate at least some of the problems or disadvantages in the prior art, whether identified herein or elsewhere. For instance, it is an aim of exemplary embodiments of the invention to provide methods and apparatus for forming shaped prosthodontic items *in situ* in a dental workshop or consulting room. Another aim of the disclosure is to provide apparatus and methods for forming dental prosthodontic items *in situ* which are be compatible with, and easily joined to, existing dental prosthodontic items comprising PAEK but perhaps formed by other means, such as by milling from a block of PAEK-comprising composition or by moulding.

According to the present disclosure there are provided apparatus, dental frameworks and methods as set forth in the appended claims. Other features of the invention will be apparent from the dependent claims, and the description which follows.

Throughout this specification, the term "comprising" or "comprises" means including the component(s) specified but not to the exclusion of the presence of other components. The term "consisting essentially of" or "consists essentially of" means including the components specified but excluding other components except for materials present as impurities, unavoidable materials present as a result of processes used to provide the components, and components added for a purpose other than achieving the technical effect of the disclosure. Typically, when referring to compositions, a composition consisting essentially of a set of components will comprise less than 5% by weight, typically less than 3% by weight, more typically less than 1 % by weight of non-specified components.

The term "consisting of" or "consists of" means including the components specified but excluding other components.

Whenever appropriate, depending upon the context, the use of the term "comprises" or "comprising" may also be taken to include the meaning "consists essentially of" or "consisting essentially of", and also may also be taken to include the meaning "consists of" or "consisting of".

References herein such as "in the range x to y" are meant to include the interpretation "from x to y" and so include the values x and y.

The optional features set out herein may be used either individually or in combination with each other where appropriate and particularly in the combinations as set out in the accompanying claims. The optional features for each aspect or exemplary embodiment of the invention, as set out herein, are also applicable to any other aspects or exemplary embodiments of the invention, where appropriate. In other words, the skilled person reading this specification should consider the optional features for each exemplary embodiment of the invention as interchangeable and combinable between different aspects or exemplary embodiments.

A first aspect of the disclosure provides a method of joining first and second portions of a dental framework to form an integrated dental framework,
wherein the first and second portions of dental framework are each independently formed of a composition comprising a polymeric material,
wherein the polymeric material comprises a repeat unit of formula (I): 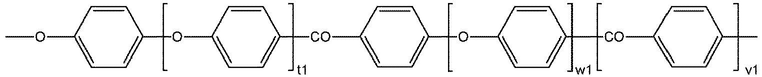 wherein t1 and w1 independently represent 0 or 1 and v1 represents 0, 1 or 2; the method comprising:
providing a male member on a first joint surface of the first portion and a female member on a second joint surface of the second portion, wherein the male and female members are arranged to mate together to hold the first and second portions together with the first and second joint surfaces mutually inter-engaged in the integrated dental framework;
bringing the first and second joint surfaces into inter-engagement with the male and female members mated together; and
welding the first and second joint surfaces together by ultrasonic welding.

The composition, may consist or consist essentially of the polymeric material, or may include, for instance from 60 to 100%, say from 75 to 100% of the polymeric material, with from 0 to 40%, say from 0 to 25% of other materials. The composition may include, for example colourants (e.g. pigments, ceramics, metal oxides (e.g. titanium dioxide)) or fillers (for example reinforcing or wear enhancing fillers or fibres, bioactive fillers such as bioglasses, soluble glasses, zeolites containing antibacterial agents such as silver ions, nanosilver, ceramics such as hydroxyapatite (HA) or substituted HA or treatment agents such as antibiotic doped HA or compounds favourable to the gingiva, diagnostic agents such as radiopaque fillers such as barium sulphate, aesthetic fillers such as reflective agents and light refracting agents, fillers conveying some taste or flavour altering or enhancing effect or breath freshening effect). The composition may include, for instance, 0-10 wt%, suitably 0-6 wt% of colourants. Colourants may be selected so the composition is white. Colourants may be employed so that the colour is graduated. In one embodiment, the composition includes no colourant. When a filler is included in the composition, it may suitably be included to improve the mechanical properties and/or bonding characteristics and/or biological acceptability of the composition. However, it has been found that cores for tooth prostheses with excellent mechanical properties can be made without requiring addition of filler. Preferably, the composition comprises at least 80 wt%, at least 90 wt% or at least 94 wt% of the polymeric material. The polymeric material may be the same polymeric material for each of the first and second portions, or may be a different polymeric material. Preferably, the same polymeric material such as PEEK homopolymer is used as polymeric material in each of the first and second portions.

The polymeric material preferably consists essentially of a repeat unit of formula I. Preferred polymeric materials comprise (or consist essentially of) a repeat unit wherein t1=1, v1=0 and w1=0; t1=0, v1=0 and w1=0; t1=0, w1=1, v1=2; or t1=0, v1=1 and w1=0. More preferred polymeric materials comprise (or consist essentially of) a repeat unit wherein t1=1, v1=0 and w1=0; or t1=0, v1=0 and w1=0. The most preferred polymeric material comprises (or consists essentially of) a repeat unit wherein t1=1, v1=0 and w1=0: in other words a homopolymeric polyetheretherketone.

In preferred embodiments, the polymeric material is selected from polyetheretherketone, polyetherketone, polyetherketoneetherketoneketone and polyetherketoneketone. In a more preferred embodiment, the polymeric material is selected from polyetherketone and polyetheretherketone. In another preferred embodiment, the polymeric material is polyetheretherketone such as a homopolymer polyetheretherketone.

The polymeric material may have a Notched Izod Impact Strength (specimen 80mm x 10mm x 4mm with a cut 0.25mm notch (Type A), tested at 23°C, in accordance with IS0180) of at least 4KJm⁻², preferably at least 5KJm⁻², more preferably at least 6KJm⁻². The Notched Izod Impact Strength may be less than 10KJm⁻², suitably less than 8KJm⁻² The Notched Izod Impact Strength may be at least 3KJm⁻², suitably at least 4KJm⁻², preferably at least 5KJm⁻². The impact strength may be less than 50 KJm⁻², suitably less than 30KJm⁻².

The polymeric material suitably has a melt viscosity (MV) of at least 0.06 kNsm⁻², preferably has a MV of at least 0.09 kNsm⁻², more preferably at least 0.12 kNsm⁻², or at least 0.15 kNsm⁻². Advantageously, the MV may be at least 0.35 kNsM⁻² and/or at least 0.40 kNsm⁻² An MV of 0.45 kNsM⁻² has been found to be particularly advantageous in the manufacture of accurate, strong dental prosthetics.

MV is suitably measured using capillary rheometry operating at 400°C at a shear rate of 1000s⁻¹ using a cylindrical tungsten carbide die, 0.5mmx3.175mm (diameter x length of die).

The polymeric material may have a MV of less than 1.00 kNsm⁻², preferably less than 0.5 kNsm⁻².

The polymeric material may have a MV in the range 0.09 to 0.5 kNsm⁻², preferably in the range 0.14 to 0.5 kNsm⁻², more preferably in the range 0.4 to 0.5 kNsm⁻².

The polymeric material may have a tensile strength, measured in accordance with ISO527 (specimen type 1b) tested at 23°C at a rate of 50mm/minute of at least 20 MPa, preferably at least 60 MPa, more preferably at least 80 MPa. The tensile strength is preferably in the range 80-110 MPa, more preferably in the range 80-100 MPa.

The polymeric material may have a flexural strength, measured in accordance with ISO178 (80mm x 10mm x 4mm specimen, tested in three-point-bend at 23°C at a rate of 2mm/minute) of at least 50 MPa, preferably at least 100 MPa, more preferably at least 145 MPa. The flexural strength is preferably in the range 145-180MPa, more preferably in the range 145-164 MPa.

The polymeric material may have a flexural modulus, measured in accordance with ISO178 (80mm x 10mm x 4mm specimen, tested in three-point-bend at 23°C at a rate of 2mm/minute) of at least 1 GPa, suitably at least 2 GPa, preferably at least 3 GPa, more preferably at least 3.5 GPa. The flexural modulus is preferably in the range 3.5-4.5 GPa, more preferably in the range 3.5-4.1 GPa.

The polymeric material may be amorphous or semi-crystalline. It is preferably crystallisable. It is preferably semi-crystalline. The level and extent of crystallinity in a polymer is preferably measured by wide angle X-ray diffraction (also referred to as Wide Angle X-ray Scattering or WAXS), for example as described by Blundell and Osborn (Polymer 24, 953, 1983). Alternatively, crystallinity may be assessed by Differential Scanning Calorimetry (DSC).

The level of crystallinity of the polymeric material may be at least 1 %, suitably at least 3%, preferably at least 5% and more preferably at least 10%. In or preferred embodiments, the crystallinity may be greater than 25%. It may be less than 50% or less than 40%. Preferably the prosthodontic device includes a framework having the aforementioned levels of crystallinity.

The main peak of the melting endotherm (Tm) of the polymeric material (if crystalline) may be at least 300°C.

For the polymeric material, it is preferred that t1=1, v1=0 and w1=0.

For the method of the first aspect of the disclosure, the welding the first and second joint surfaces together by ultrasonic welding may comprise welding the male and female members together by ultrasonic welding.

The polymeric material in the composition of the first portion may be the same polymeric material as the polymeric material in the composition of the second portion, or, alternatively, the polymeric material in the composition of the first portion may be a different polymeric material to the polymeric material in the composition of the second portion. However, it is to be understood that even when the polymeric materials of the different portions are different polymeric materials, they are still each individually polymeric materials according to formula (I) as set out hereinbefore.

Preferably, t1=1, v1=0 and w1=0 for the polymeric material in the composition of the first portion, or the second portion, or for both portions (i.e. homopolymeric polyetheretherketone).

The first and second joint surfaces may be arranged to hinder rotation of the second portion about the male member of the first portion when the first and second joint surfaces are inter-engaged.

For instance, one way of achieving this may be for two or more male members to be provided on the first joint surface and two or more female member to be provided on the second joint surface of the second portion, wherein the male and female members may be arranged to mate together to hold the first and second portions together with the first and second joint surfaces mutually inter-engaged in the integrated dental framework.

The first portion may be a replacement portion for repair of a broken dental framework and the second portion may be a remnant portion of the broken dental framework. In other words, the method of the first aspect of the disclosure may be used for repair of a pre-used dental framework which has already been fitted to a patient's mouth and worn by the patient, when the dental framework has broken in use. A major remnant portion of the broken dental framework may be re-used and welded to a replacement portion, using the method of the first aspect of the disclosure, in order to provide a repaired dental framework.

In order to achieve this, the female member may formed by forming a hole in the remnant portion prior to bringing the first and second joint surfaces into inter-engagement with the male and female members mated together. The male member may be formed as a unitary part of the first joint surface. The second joint surface may comprises fracture surface of the remnant portion and the first joint surface may shaped to engage with the fracture surface when the first and second joint faces are inter-engaged. In other words, the first joint surface may be made to match the fracture surface on the remnant portion of the broken dental framework. This may be achieved through computer-aided mapping of the fracture surface and subsequent computer-aided machining of the first joint surface of the repair portion. In another embodiment, the fracture surface may be moulded, and the first joint surface prepared by moulding. The polymeric material of formula (I) is particularly suitable for moulding as set out hereinafter.

In the event that the fracture surface is not a suitable shape for use as a second joint surface, for instance because it contains sharp features or because the resulting joint would be prone to further fracture, then the fracture surface may be machined, for instance using milling such as computer-aided milling, in order to provide the remnant portion with a suitable second joint surface including a female member suitable for use in the method of the first aspect of the disclosure.

The repair portion may be prepared by machining from a block or blank of a composition comprising or consisting essentially of the polymeric material according to formula (I), or may be moulded therefrom, or a combination of moulding and machining may be used, for instance with the repair portion moulded to fit the patient's mouth features, but with the first joint surface formed by machining, such as computer-aided machining or milling, in order to provide an accurate fit to the second joint surface of the remnant portion (which may be a fracture surface or a modified fracture provided with a female member). However, in a preferred embodiment, the repair portion may be formed, at least in part using the method and/or apparatus of the fourth and sixth aspects of the disclosure as set out hereinafter.

The method of the first aspect of the disclosure may comprise forming the first and second portions from first and second moulds prepared from impressions from a patient's mouth. The first and second moulds are prepared from separate first and second impressions taken from the patient's mouth. This gives the advantage of enabling the preparation of a complex dental framework from partial moulds, so that a large mould, leading to potential for choking or a high level of discomfort for the patient during moulding, is not required in the patient's mouth. Instead, separate, smaller moulds may be used for different portions of the dental framework, then the method of the disclosure may be used to form an integrated dental framework without putting the patient through an uncomfortable moulding process.

In the method according to the first aspect of the disclosure, the integrated dental framework may comprise at least one further portion of dental framework which is independently formed of a composition comprising a polymeric material, wherein the polymeric material comprises a repeat unit of formula (I): 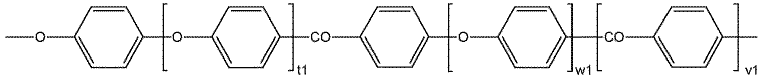 wherein t1 and w1 independently represent 0 or 1 and v1 represents 0, 1 or 2; with the method comprising: providing at least one further joint surface on each further portion which is arranged to inter-engage with a respective further complementary joint surface on the first, second or another portion of the integrated dental framework, providing a further male member on one of the further joint surface and the respective further complementary joint surface and a further female member on the other of the further joint surface and the further complementary joint surface; wherein the further male and female members are each arranged to mate together to hold each further joint surface and the respective further complementary joint surface together, mutually inter-engaged in the integrated dental framework; bringing each further joint surface and respective further complementary joint surface into inter-engagement with their male and female members mated together; and welding the further joint surface and its respective further complementary joint surface together by ultrasonic welding.

In other words, the method of the first aspect of the disclosure may be applied to a plurality (two or more, such as three, or more or four or more) of portions of dental framework being ultrasonically welded together in order to provide an integrated dental framework.

The polymeric material in the composition of each further portion may be the same polymeric material as the polymeric material in the composition of the first and second portions, or may be a different polymeric material, but it should be understood that each portion is to be of a composition comprising a polymeric material according to formula (I).

For the method of the first aspect of the disclosure, the, or each, male member may be cylindrical or frustoconical in shape. Typically, the diameter or maximum width measured through a central long axis of the male member will be 1 to 7mm, say from 2 to 6mm.

The male member may comprise a proximal platform arranged to abut an outer portion of its respective female member when the male and female members are mated together. By "proximal" is meant adjacent or nearest to the first joint surface of which the males member forms a part. By "outer portion" is meant the portion of the female member directed from the second joint surface towards the first joint surface when the male and female members are mated together.

Suitably, walls forming the joint surfaces or the male or female members should have a thickness of at least 1 mm of the composition comprising or consisting essentially of the polymeric material of formula (I).

The ultrasonic welding may be suitably carried out using a sonotrode under manual or computer control. The sonotrode preferably has a terminal welding surface which is circular or substantially equilaterally polygonal in shape. The terminal welding surface may be planar or curved and may be flat (i.e. smooth) or roughened.

The sonotrode may comprise a terminal welding surface having a maximum width of 6mm or less. The maximum width is measured through the centroid of the terminal welding surface.

The preferred or optional features set out in relation to the first aspect of the disclosure are applicable, where appropriate, to the other aspects of the disclosure set out below, and should be considered as additionally disclosed in relation to these aspects in order to avoid repetition.

A second aspect of the disclosure provides an integrated dental framework obtained or obtainable by the method of the first aspect of the disclosure. A third aspect of the disclosure provides an integrated dental framework comprising at least two interconnected portions of dental framework, wherein each portion of dental framework is independently formed of a composition comprising a polymeric material,
wherein the polymeric material comprises a repeat unit of formula (I): 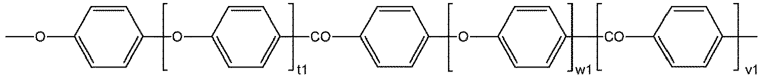 wherein t1 and w1 independently represent 0 or 1 and v1 represents 0, 1 or 2; and
wherein each portion is connected to at least one other portion at a joint; wherein each joint comprises a male member on a first joint surface of one portion and a female member on a second joint surface of an adjacent portion;
wherein the respective male and female members at the joint are arranged to mate together to hold the first and second portions together with the first and second joint surfaces mutually inter-engaged at the joint; and
wherein the first and second joint surfaces are at least partly fused together at the joint.

A fourth aspect of the disclosure provides a method for forming a dental prosthetic item, the method comprising:
- providing a mould having a mould cavity for injection moulding having the shape of the dental prosthetic item;
- providing a thermoplastic composition in a flowable state in a cavity of a pre-moulding chamber;
- injecting the flowable thermoplastic composition from the cavity of the pre-moulding chamber and into the mould cavity under pressure;
- cooling the mould to solidify the thermoplastic composition; and
- removing the dental prosthetic item from the mould cavity;
wherein the thermoplastic composition comprises a polymeric material; and
wherein the polymeric material comprises a repeat unit of formula (I): 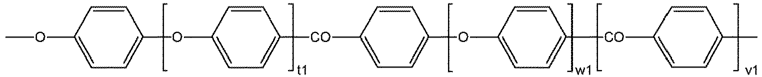 wherein t1 and w1 independently represent 0 or 1 and v1 represents 0, 1 or 2;

The composition, may consist or consist essentially of the polymeric material, or may include, for instance from 60 to 100%, say from 75 to 100% of the polymeric material, with from 0 to 40%, say from 0 to 25% of other materials. The composition may include, for example colourants (e.g. pigments, ceramics, metal oxides - such as titanium dioxide) or fillers (for example reinforcing or wear enhancing fillers or fibres, bioactive fillers such as bioglasses, soluble glasses, zeolites containing antibacterial agents such as silver ions, nanosilver, ceramics such as hydroxyapatite (HA) or substituted HA or treatment agents such as antibiotic doped HA or compounds favourable to the gingiva, diagnostic agents such as radiopaque fillers such as barium sulphate, aesthetic fillers such as reflective agents and light refracting agents, fillers conveying some taste or flavour altering or enhancing effect or breath freshening effect). The composition may include, for instance, 0-10 wt%, suitably 0-6 wt% of colourants. Colourants may be selected so the composition is white. Colourants may be employed so that the colour is graduated. In one embodiment, the composition includes no colourant. When a filler is included in the composition, it may suitably be included to improve the mechanical properties and/or bonding characteristics and/or biological acceptability of the composition. However, it has been found that cores for tooth prostheses with excellent mechanical properties can be made without requiring addition of filler. Preferably, the composition comprises at least 80 weight%, at least 90 weight% or at least 94 weight% of the polymeric material.

The polymeric material preferably consists essentially of a repeat unit of formula I. Preferred polymeric materials comprise (or consist essentially of) a repeat unit wherein t1=1, v1=0 and w1=0; t1=0, v1=0 and w1=0; t1=0, w1=1, v1=2; or t1=0, v1=1 and w1=0. More preferred polymeric materials comprise (or consist essentially of) a repeat unit wherein t1=1, v1=0 and w1=0; or t1=0, v1=0 and w1=0. The most preferred polymeric material comprises (or consists essentially of) a repeat unit of Formula (I) wherein t1=1, v1=0 and w1=0: in other words homopolymeric polyetheretherketone.

In preferred embodiments, the polymeric material is selected from polyetheretherketone, polyetherketone, polyetherketoneetherketoneketone and polyetherketoneketone. In a more preferred embodiment, the polymeric material is selected from polyetherketone and polyetheretherketone. In another preferred embodiment, the polymeric material is polyetheretherketone such as homopolymeric polyetheretherketone. As used herein, the term PAEK may refer to any of these materials.

The preferred or optional parameters or characteristics set out in relation to the polymeric material, set out herein, are applicable to the material either before or after it has been moulded in accordance with the method of the disclosure, as part of, or all of the thermoplastic composition.

The polymeric material may have a Notched Izod Impact Strength (specimen 80mm x 10mm x 4mm with a cut 0.25mm notch (Type A), tested at 23°C, in accordance with ISO180) of at least 4KJm-², preferably at least 5KJm⁻², more preferably at least 6KJm⁻². The Notched Izod Impact Strength may be less than 10KJm⁻², suitably less than 8KJm⁻². The Notched Izod Impact Strength may be at least 3KJm⁻², suitably at least 4KJm⁻², preferably at least 5KJm⁻². The impact strength may be less than 50 KJm⁻², suitably less than 30KJm⁻².

The polymeric material suitably has a melt viscosity (MV) of at least 0.06 kNsm⁻², preferably has a MV of at least 0.09 kNsm⁻², more preferably at least 0.12 kNsm⁻², or at least 0.15 kNsm⁻². Advantageously, the MV may be at least 0.35 kNsm⁻² and/or at least 0.40 kNsm⁻² An MV of 0.45 kNsm⁻² has been found to be particularly advantageous in the manufacture of strong prosthodontics.

MV is suitably measured using capillary rheometry operating at 400°C at a shear rate of 1000s⁻¹ using a tungsten carbide die, 0.5mmx3.175mm, as described hereinbefore.

The polymeric material may have a MV of less than 1.00 kNsm⁻², preferably less than 0.5 kNsm⁻².

The polymeric material may have a MV in the range 0.09 to 0.5 kNsm⁻², preferably in the range 0.14 to 0.5 kNsm⁻², more preferably in the range 0.4 to 0.5 kNsm⁻².

The polymeric material may have a tensile strength, measured in accordance with ISO527 (specimen type 1b) tested at 23°C at a rate of 50mm/minute of at least 20 MPa, preferably at least 60 MPa, more preferably at least 80 MPa. The tensile strength is preferably in the range 80-110 MPa, more preferably in the range 80-100 MPa.

The polymeric material may have a flexural strength, measured in accordance with ISO178 (80mm x 10mm x 4mm specimen, tested in three-point-bend at 23°C at a rate of 2mm/minute) of at least 50 MPa, preferably at least 100 MPa, more preferably at least 145 MPa. The flexural strength is preferably in the range 145-180MPa, more preferably in the range 145-164 MPa.

The polymeric material may have a flexural modulus, measured in accordance with ISO178 (80mm x 10mm x 4mm specimen, tested in three-point-bend at 23°C at a rate of 2mm/minute) of at least 1 GPa, suitably at least 2 GPa, preferably at least 3 GPa, more preferably at least 3.5 GPa. The flexural modulus is preferably in the range 3.5-4.5 GPa, more preferably in the range 3.5-4.1 GPa.

The polymeric material may be amorphous or semi-crystalline. It is preferably crystallisable. It is preferably semi-crystalline. The level and extent of crystallinity in a polymer is preferably measured by wide angle X-ray diffraction (also referred to as Wide Angle X-ray Scattering or WAXS), for example as described by Blundell and Osborn (Polymer 24, 953, 1983). Alternatively, crystallinity may be assessed by Differential Scanning Calorimetry (DSC).

The level of crystallinity of the polymeric material may be at least 1 %, suitably at least 3%, preferably at least 5% and more preferably at least 10%. In or preferred embodiments, the crystallinity may be greater than 25%. It may be less than 50% or less than 40%. Preferably the dental prosthetic item as formed has the aforementioned levels of crystallinity.

The main peak of the melting endotherm (Tm) of the polymeric material may be at least 300°C, such as from 300 to 400°C, for instance 300 to 350°C.

By the term "flowable" as used herein, referring to a composition, it is meant that the composition is substantially flowable when pressure is applied to it, such that at least 100m1 of the composition may be flowed through a 0.5cm diameter orifice in a 1 mm thick wall when subject to a pressure difference of 1 bar over a period of 1 minute. Preferably, the thermoplastic composition may be molten, by which it is meant that when placed in a vessel, in a molten state, the composition will self-level to form a horizontal surface within +/- 0.5cm over a period of 30 minutes. Typically, this means that the temperature will be in excess of the main peak of the melting endotherm (Tm) of the polymeric material.

The mould may suitably be prepared from an impression from a patient's mouth.

The thermoplastic composition may suitably be provided in the form of granules. For instance, at least 90% by weight of the granules may have a particle size from 0.5 to 8mm as measured by sieving.

The method of the fourth aspect of the disclosure may further comprise drying the granules of thermoplastic material to a moisture content of 0.1 % or less. The moisture content may be measured by weight loss at 200°C for 30 minutes, using a small sample of granules (say 10 grams) in a thermostatically controlled oven in a dry atmosphere. This arrangement reduces the risk of voids formed from water vapour being present in the resulting dental prosthetic item.

The thermoplastic composition may be brought into a flowable state in the cavity of the pre-moulding chamber prior to injection into the mould.

In a preferred exemplary embodiment of the disclosure, the thermoplastic composition may be heated to a temperature less than, but within 50°C of, the main peak of the melting endotherm, Tm, of the thermoplastic composition, prior to providing the thermoplastic composition in the cavity of the pre-moulding chamber.

Suitably, the thermoplastic composition should be retained in the cavity of the pre-moulding chamber for 30 minutes or less. For instance, the composition may be retained for 20 minutes or less, such as for 15 minutes or less. This arrangement reduces the risk of thermal decomposition of the polymeric material of the thermoplastic composition.

The thermoplastic composition may brought to a temperature from 350 to 420 °C, preferably from 380 to 400 °C, immediately prior to injection into the mould. This is in order to ensure that the thermoplastic composition is in a flowable state.

Preferably, the thermoplastic composition comprises 60% or more by weight of the polymeric material, such as 70% or more for instance 80% or more. In one preferred exemplary embodiment of the disclosure the thermoplastic composition may consist or consist essentially of the polymeric material, preferably with homopolymeric polyetheretherketone as the polymeric material.

The thermoplastic composition may be maintained under pressure, following injection into the mould cavity, until the thermoplastic composition has solidified.

By "solidified" it is meant that the thermoplastic composition is no longer flowable.

The solidification of the thermoplastic composition may be controlled, for instance by reducing the cooling rate by means of thermal shielding or by use of a thermal controller for the mould, to give a crystallinity of 5% or more, preferably 15% or more, for the polymeric material after moulding into the dental prosthetic item. Crystallinity may be measured as set out hereinbefore.

The dental prosthetic item prepared by the method of the fourth aspect of the disclosure may be a denture, crown, bridge, abutment or implant, or a portion thereof, such as a repair portion.

The preferred or optional features set out in relation to the fourth aspect of the disclosure are applicable, where appropriate, to the fifth to seventh aspects of the disclosure set out below, and should be considered as additionally disclosed in relation to these aspects in order to avoid repetition.

A fifth aspect of the disclosure provides a dental prosthetic item, such as a repair portion, obtained or obtainable by the method of the fourth aspect of the disclosure. A sixth aspect of the disclosure provides an apparatus for forming a dental prosthetic item, the apparatus comprising:
- a mould for injection moulding comprising a cavity having the shape of the dental prosthetic item;
- a pre-injection chamber having cavity with a fluid connection to the mould cavity and arranged for retaining a thermoplastic polymer in a flowable state prior to injection into the mould cavity; and
- a press arranged for driving said flowable thermoplastic polymer from the cavity of the pre-injection chamber into the mould cavity through the fluid connection under pressure.

The mould and the pre-injection chamber may be of unitary construction (i.e. formed as a single structure), or may be separate items arranged for mutual, removable interconnection such that there is a fluid connection between the respective cavities.

The mould may include exit tubes of a small diameter (say 0.5mm or less) so that air can be expelled from the mould cavity as the thermoplastic composition is injected into the mould in its flowable state. This means that no vacuum needs to be applied in order to achieve a fully-filled mould.

The apparatus of the sixth aspect of the disclosure may comprise a first temperature controller arranged to control the temperature of the pre-injection chamber. For instance this may be a heating element under control of a thermostatic control means arranged to hold the pre-injection chamber at a desired preset temperature.

The apparatus may comprise a second temperature controller arranged to control the temperature of the mould. For instance this may be a heating and/or cooling element under control of a thermal control means arranged to control the cooling of the mould after injection whereby the solidified thermoplastic composition is cooled at a slow rate in order to provide a desired level of crystallinity for the polymeric material in the thermoplastic composition.

The press may be a mechanical press comprising a plunger arranged for driving the flowable thermoplastic polymerfrom the cavity of the pre-injection chamber into the mould cavity under pressure.

The mechanical press may comprise a brake for retaining the plunger in place prior to injection and a mechanism for applying a driving force to the plunger whilst retained by the brake, which driving force is applied by the plunger to the flowable thermoplastic polymer after release of the brake. The mechanism for applying the driving force may be, for instance, a resilient means such as a spring, which is compressed to a desired degree against the plunger in order to provide the driving force.

A seventh aspect of the disclosure provides use of a method according to the fourth aspect of the disclosure, or of an apparatus according to the sixth aspect of the disclosure, wherein the method or apparatus is used to prepare a dental prosthetic item for a patient in a dental laboratory or surgery, following a consultation with the patient, whereby the dental prosthetic item is made available to the patient within 24 hours of the consultation. That is, the dental prosthetic item is made available the patient within 24 hours of the end of the consultation, preferably even sooner such as on the same day as the consultation, for instance within 2 hours of the consultation. The disclosure allows for a dental prosthesis to be rapidly prepared *in-situ* at a dental surgery, and fitted in order to minimise inconvenience to a patient, without the requirement for complex apparatus or handling of potentially toxic monomers.

For a better understanding of the disclosure, and to show how exemplary embodiments of the same may be carried into effect, reference will be made, by way of example only, to the accompanying diagrammatic Figures, in which:
Figure 1 schematically depicts first and second portions which are welded together according to a first embodiment of the disclosure to form an integrated dental framework;
Figure 2A schematically depicts a dental framework with a fracture surface 8;
Figure 2B schematically depicts first remnant and second repair portions which are welded together according to a first embodiment of the disclosure to form a repaired dental framework;
Figure 3, schematically depicts an embodiment of an apparatus according to the sixth aspect of the disclosure, for carrying out an exemplary embodiment of a method according to the fourth aspect of the disclosure.

For each of the embodiments set out below, the composition of the dental frameworks and/or portions of dental framework consists of: PEEK-OPTIMA (Trade Mark) LT1 - polyetheretherketone (PEEK) of melt viscosity (MV) 0.45 kNsm⁻², simply referred to hereinafter a PEEK. Alternatively other variants of PEEK-OPTIMA® (Trade Mark) LT2 or LT3 of melt viscosity (MV) in the range between 0.45 and 0.15 could also have been used.

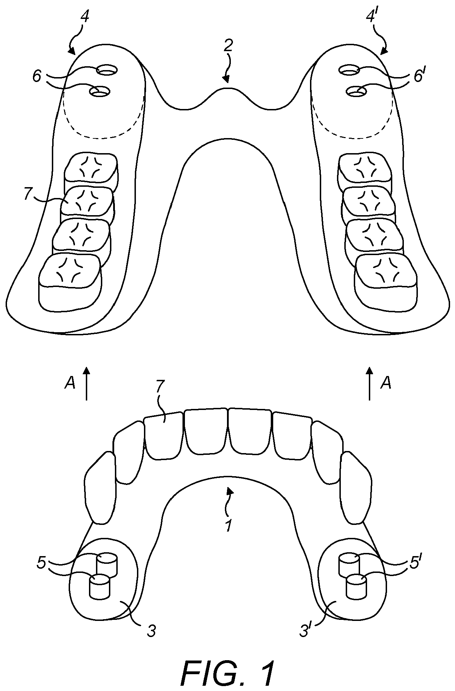

Turning to Figure 1, a first portion 1 of dental framework is shown, formed including first joint surfaces 3, 3' each having two male members 5, 5' formed unitarily with the first portion 1. A second portion 2 of dental framework has second joint surfaces 4, 4' (not directly visible in the Figure) each including two female members 6, 6' formed therein. Prosthetic teeth 7 are shown already included in the portions 1, 2 of dental framework but these may be incorporated before or after the welding together of the two portions 1, 2 to from an integrated dental framework.

In accordance with the method of the first aspect of the disclosure, the first portion 1 is pushed into the second portion 2 in order to mate the male members 5 with the female members 6, and the male members 5' with the female members 6', so that the first joint surface 3 s also brought into contact with second joint surface 4 and first joint surface 3' is brought into contact with second joint surface 4'. The joint surfaces are then welded together ultrasonically by contacting the adjoining surfaces of the portions with the terminal welding surface of a handheld sonotrode having ultrasonic power supplied thereto (70 KHz at 100W). In particular, the edges of the female members 6, 6' are welded to the male members 5, 5' where these protrude through the female members. The protruding male members, following ultrasonic welding, may be covered by a crown in order to mask their appearance or to provide a further tooth prosthesis.

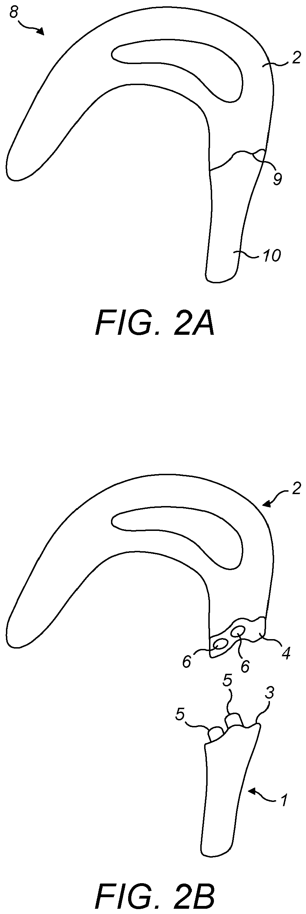

Turning to Figure 2A, this shows a dental framework 8 which has fractured during wear, generating a fracture surface 9 and breaking the dental framework into a remnant portion 2 and a broken portion 10 which may be discarded. In Figure 2B, the fracture surface 9 of the remnant portion 2 has been milled to form a second contact surface 4 having a suitable shape for forming a repair joint. Female members 6 have been formed in the second joint surface by drilling holes therein.

A repair portion 1 has been formed using the original mould details from the broken dental framework, but with a first joint surface 3 formed by computer-aided machining in order to include unitarily formed male members 5, and with the first joint surface 3 and the male members 5 shaped to respectively mate with the female members 6 and complement the second joint surface 4.

The repair is achieved to form a repaired dental framework by pushing together the opposing joint surfaces 3, 4 so that the male members 5 mate with the female members 6 and contacting the adjoining surfaces of the portions with the terminal welding surface of a handheld sonotrode having ultrasonic power supplied thereto. For this example, the sonotrode has a square, flat terminal welding surface having 4mm square sides. In particular, the edges of the female members 6 are welded to the male members 5 where these protrude through the female members (through the back surface of the remnant portion 2, not shown in the Figure).

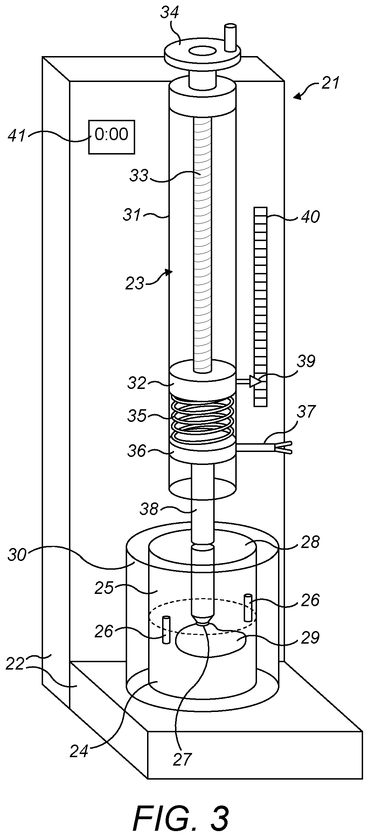

Turning to Figure 3, in this Figure, for the sake of clarity, the components are shown as being of a transparent material so that the details of operation are easily visible. However, it will be understood that such transparency is not a requirement for the disclosure. Figure 3 shows an apparatus 21 having a support structure 22, supporting a mechanical press 23 and a mould 24. The mould 24 is removably attached to a pre-injection chamber 25 by retainers (screwed plates) 26 and there is a fluid connection 27 connecting a cavity 28 in the pre-injection chamber 25 to the mould cavity 29 in the mould 24.

In this embodiment, there is a thermal shield 30 surrounding the mould and pre-injection chamber. It will be understood that this shield 30 acts to reduce the cooling rate of the thermoplastic composition following moulding for this exemplary embodiment.

The mechanical press 23 has a cylindrical tubular wall 31 in which a piston 32 is constrained to travel, driven by a screw 33 turned by handle 34. A spring 35 is located between the piston 32 and a circular plate 36 which is also constrained to travel within the tubular wall 31. A plunger 38 in the form of a rod adapted to be snugly slidable into the pre-injection cavity 28 is rigidly attached to the plate 36. The plate 36 is shown held fixed in the tubular wall 31 by a brake 37 in a locked configuration. The piston 32 is shown compressing the spring 35 against the plate 36 to provide a driving force acting on the plunger 38 through the plate 36 when the brake 37 is released. A pointer 39 arranged to move with the piston 32 indicates the driving force on the scale 40 on the support structure 22.

In use, the plate 36 is locked in place by the brake 37 and the spring 35 compressed by the piston 32, against the plate 16 by turning the handle 34 so that the screw 33 drives the piston 32 (which is connected to the screw 33 by a tapped hole (not shown) down towards the plate 36. When a desired driving force is reached, as indicated by the pointer 39 on scale 40, granules of PEEK, which have been pre-melted in an oven, are poured into the pre-injection cavity 28 which is then aligned under the piston 38. The brake 37 is released so that the plunger 38 is driven into the pre-injection cavity, forcing the PEEK in its molten, flowable state into the mould cavity 29. The pressure from the mechanical press remains in place as the mould cools (with cooling slowed by the thermal barrier 30 to provide crystallinity in the PEEK of the resulting moulded item). When the PEEK has solidified, the pressure is released by turning back the handle 34 and the moulded dental prosthetic item removed from the mould cavity 29. A timer 41 is provided in the support structure 22 and may be used to estimate when the moulded item has solidified. The mould cavity in this embodiment is composed of a plurality of inter-engageable parts (at least two parts - not shown - held together by retainers - not shown) to facilitate removal of the moulded item from the mould cavity.

Although a few exemplary embodiments have been shown and described, it will be appreciated by those skilled in the art that various changes and modifications might be made without departing from the scope of the disclosure, as defined in the appended claims. For example, a different frequency or power of ultrasonics, other than as set out in the embodiments described, may be used for ultrasonic welding. As a further example, the pre-injection chamber 25 in Figure 3 may include a heater to heat it to a temperature at which the PEEK granules are molten/flowable, in which case the granules may be pre-heated in an oven to a temperature a few degrees (say 20°C) below their melting temperature, at which they are still solid, so that they can be easily poured into the cavity 28 without them adhering to the container used to transfer them from the oven. The final melting stage may be carried out in the pre-injection chamber 25.

In summary, a method for forming an integrated or repaired dental framework is disclosed. Portions of dental framework formed of a composition comprising a polymeric material: 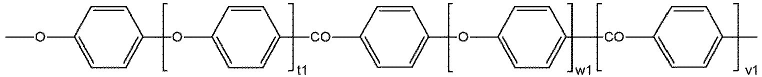 wherein t1 and w1 independently represent 0 or 1 and v1 represents 0, 1 or 2;
are provided with a male member on a joint surface of one portion and a female member on a joint surfaces of second portion, with the male and female members arranged to mate together to hold the portions together at the joint surfaces and then welded together by ultrasonic welding. Integrated dental frameworks formed by the method are also disclosed.

Large dental frameworks may thus be formed from the easily machinable, biocompatible polymeric material by moulding portions of a patient's mouth sequentially and forming an integrated framework from the moulds. Similarly, broken dental frameworks may be easily and conveniently repaired.

The disclosure provides methods for forming a dental prosthetic item, such as a repair portion, involving injecting a flowable thermoplastic composition from into a mould under pressure and cooling the mould to solidify the thermoplastic composition. The thermoplastic composition comprises a polymeric material with a repeat unit of formula (I): 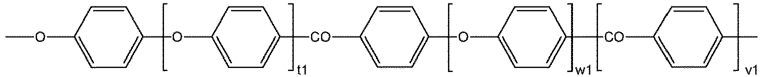 wherein t1 and w1 independently represent 0 or 1 and v1 represents 0, 1 or 2.

Apparatus for putting the methods into effect and dental prosthetic items made using the method are disclosed, as is the use of the methods and apparatus for rapid preparation of prostheses following a consultation.

The disclosure allows for easy and rapid formation of durable and non-toxic dental prosthetic items in a dental laboratory or surgery without the need for complex apparatus or handling of toxic monomers.

## Claims

1. A method of joining first and second portions (1,2) of a dental framework (8) to form an integrated dental framework,
wherein the first and second portions (1,2) of dental framework (8) are each independently formed of a composition comprising a polymeric material,
wherein the polymeric material comprises a repeat unit of formula (I): 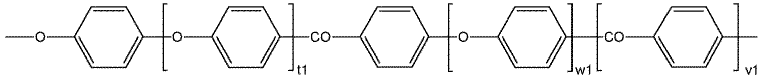 wherein t1 and w1 independently represent 0 or 1 and v1 represents 0, 1 or 2;
the method comprising:
providing a male member (5) on a first joint surface (3) of the first portion and a female member (6) on a second joint surface (4) of the second portion, wherein the male and female members are arranged to mate together to hold the first and second portions together with the first and second joint surfaces mutually inter-engaged in the integrated dental framework;
bringing the first and second joint surfaces into inter-engagement with the male and female members mated together; and
welding the first and second joint surfaces together by ultrasonic welding.

2. A method according to claim 1 wherein the welding the first and second joint surfaces together by ultrasonic welding comprises welding the male and female members together by ultrasonic welding.

3. A method according to claim 1 or claim 2 wherein the polymeric material in the composition of the first portion is the same polymeric material as the polymeric material in the composition of the second portion.

4. A method according to claim 1 or claim 2 wherein the polymeric material in the composition of the first portion is a different polymeric material to the polymeric material in the composition of the second portion.

5. A method according to any preceding claim wherein t1=1, v1=0 and w1=0 for the polymeric material in the composition of the first and/or second portions.

6. A method according to any preceding claim wherein the first and second joint surfaces are arranged to hinder rotation of the second portion about the male member of the first portion when the first and second joint surfaces are inter-engaged.

7. A method according to claim 6 wherein two or more male members are provided on the first joint surface and two or more female member are provided on the second joint surface of the second portion, wherein the male and female members are arranged to mate together to hold the first and second portions together with the first and second joint surfaces mutually inter-engaged in the integrated dental framework.

8. A method according to any preceding claim wherein the first portion is a replacement portion for repair of a broken dental framework and the second portion is a remnant portion of said broken dental framework.

9. A method according to claim 8 wherein the female member is formed by forming a hole in the remnant portion prior to bringing the first and second joint surfaces into inter-engagement with the male and female members mated together.

10. A method according to claim 8 or claim 9 wherein the second joint surface comprises a fracture surface of the remnant portion and the first joint surface is shaped to engage with the fracture surface when the first and second joint faces are inter-engaged.

11. A method according to any one of claims 1 to 7 comprising forming the first and second portions from first and second moulds prepared from impressions from a patient's mouth.

12. A method according to any preceding claim wherein the integrated dental framework comprises at least one further portion of dental framework which is independently formed of a composition comprising a polymeric material,
wherein the polymeric material comprises a repeat unit of formula (I): 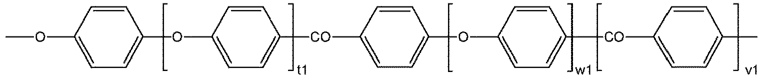 wherein t1 and w1 independently represent 0 or 1 and v1 represents 0, 1 or 2;
the method comprising:
providing at least one further joint surface on each further portion which is arranged to inter-engage with a respective further complementary joint surface on the first, second or another portion of the integrated dental framework,
providing a further male member on one of the further joint surface and the respective further complementary joint surface and a further female member on the other of the further joint surface and the further complementary joint surface, wherein the further male and female members are each arranged to mate together to hold each further joint surface and the respective further complementary joint surface together, mutually inter-engaged in the integrated dental framework;
bringing each further joint surface and respective further complementary joint surface into inter-engagement with their male and female members mated together; and
welding the further joint surface and its respective further complementary joint surface together by ultrasonic welding.

13. A method according to claim 12 wherein the polymeric material in the composition of each further portion is the same polymeric material as the polymeric material in the composition of the first and second portions.

14. A method according to any preceding claim wherein the ultrasonic welding is carried out using a sonotrode under manual or computer control.

15. An integrated dental framework comprising at least two interconnected portions (1,2) of dental framework (8), wherein each portion of dental framework is independently formed of a composition comprising a polymeric material,
wherein the polymeric material comprises a repeat unit of formula (I): 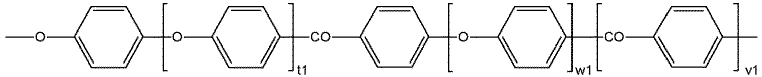 wherein t1 and w1 independently represent 0 or 1 and v1 represents 0, 1 or 2; and
wherein each portion is connected to at least one other portion at a joint;
wherein each joint comprises a male member (5) on a first joint surface (3) of one portion and a female member (6) on a second joint surface (4) of an adjacent portion;
wherein the respective male and female members at the joint are arranged to mate together to hold the first and second portions together with the first and second joint surfaces mutually inter-engaged at the joint; and
wherein the first and second joint surfaces are at least partly fused together at the joint.

## Patentansprüche

1. Verfahren zum Fügen von ersten und zweiten Abschnitten (1, 2) eines Dentalgerüsts (8), um ein einstückiges Dentalgerüst zu bilden,
wobei die ersten und zweiten Abschnitte (1, 2) des Dentalgerüsts (8) jeder unabhängig aus einer Zusammensetzung gebildet sind, die ein Polymermaterial umfasst,
wobei das Polymermaterial eine sich wiederholende Einheit der Formel (I) umfasst: 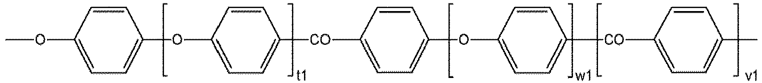
wobei t1 und w1 unabhängig für 0 oder 1 stehen und v1 für 0, 1 oder 2 steht;
wobei das Verfahren umfasst:
Vorsehen eines männlichen Elements (5) an einer ersten Fügefläche (3) des ersten Abschnitts und eines weiblichen Elements (6) an einer zweiten Fügefläche (4) des zweiten Abschnitts, wobei die männlichen und weiblichen Elemente dazu eingerichtet sind, zusammenzupassen, um die ersten und zweiten Abschnitte mit den ersten und zweiten Fügeflächen in gegenseitigem Eingriff miteinander in dem einstückigen Dentalgerüst zusammenzuhalten;
In-Eingriff-Bringen der ersten und zweiten Fügeflächen mit den zusammengepassten männlichen und weiblichen Elementen; und
Zusammenschweißen der ersten und zweiten Fügeflächen durch Ultraschallschweißen.

2. Verfahren nach Anspruch 1, wobei das Zusammenschweißen der ersten und zweiten Fügeflächen durch Ultraschallschweißen das Zusammenschweißen der männlichen und weiblichen Elemente durch Ultraschallschweißen umfasst.

3. Verfahren nach Anspruch 1 oder Anspruch 2, wobei das Polymermaterial in der Zusammensetzung des ersten Abschnitts das gleiche Polymermaterial ist wie das Polymermaterial in der Zusammensetzung des zweiten Abschnitts.

4. Verfahren nach Anspruch 1 oder Anspruch 2, wobei das Polymermaterial in der Zusammensetzung des ersten Abschnitts ein zu dem Polymermaterial in der Zusammensetzung des zweiten Abschnitts unterschiedliches Polymermaterial ist.

5. Verfahren nach einem vorhergehenden Anspruch, wobei für das Polymermaterial in der Zusammensetzung der ersten und/oder zweiten Abschnitte t1 = 1, v1 = 0 und w1= = 0 ist.

6. Verfahren nach einem vorhergehenden Anspruch, wobei die ersten und zweiten Fügeflächen dazu eingerichtet sind, Drehen des zweiten Abschnitts um das männliche Element des ersten Abschnitts zu verhindern, wenn sich die ersten und zweiten Fügeflächen in Eingriff miteinander befinden.

7. Verfahren nach Anspruch 6, wobei zwei oder mehr männliche Elemente an der ersten Fügefläche vorgesehen sind und zwei oder mehr weibliche Elemente an der zweiten Fügefläche des zweiten Abschnitts vorgesehen sind, wobei die männlichen und weiblichen Elemente dazu eingerichtet sind, zusammenzupassen, um die ersten und zweiten Abschnitte mit den ersten und zweiten Fügeflächen in gegenseitigem Eingriff miteinander in dem einstückigen Dentalgerüst zusammenzuhalten.

8. Verfahren nach einem vorhergehenden Anspruch, wobei der erste Abschnitt ein Ersatzabschnitt zur Reparatur eines gebrochenen Dentalgerüsts ist und der zweite Abschnitt ein verbliebener Abschnitt des gebrochenen Dentalgerüsts ist.

9. Verfahren nach Anspruch 8, wobei das weibliche Element vor In-Eingriff-Bringen der ersten und zweiten Fügeflächen mit den zusammengepassten männlichen und weiblichen Elementen durch Bilden eines Lochs in dem verbliebenen Abschnitt gebildet wird.

10. Verfahren nach Anspruch 8 oder Anspruch 9, wobei die zweite Fügefläche eine Bruchfläche des verbliebenen Abschnitts umfasst und die erste Fügefläche dazu geformt ist, mit der Bruchfläche einzugreifen, wenn die ersten und zweiten Fügeflächen miteinander in Eingriff sind.

11. Verfahren nach einem der Ansprüche 1 bis 7, umfassend das Bilden der ersten und zweiten Abschnitte aus ersten und zweiten Formen, die aus Abdrücken aus dem Mund eines Patienten hergestellt wurden.

12. Verfahren nach einem vorhergehenden Anspruch, wobei das einstückige Dentalgerüst wenigstens einen weiteren Dentalgerüstabschnitt umfasst, der unabhängig aus einer Zusammensetzung gebildet ist, die ein Polymermaterial umfasst,
wobei das Polymermaterial eine sich wiederholende Einheit der Formel (I) umfasst: 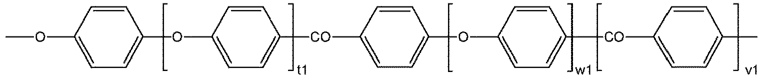
wobei t1 und w1 unabhängig für 0 oder 1 stehen und v1 für 0, 1, oder 2 steht;
wobei das Verfahren umfasst:
Vorsehen von wenigstens einer weiteren Fügefläche an jedem weiteren Abschnitt, die dazu eingerichtet ist, mit einer jeweiligen weiteren komplementären Fügefläche an dem ersten, zweiten oder einem anderen Abschnitt des einstückigen Dentalgerüsts einzugreifen,
Vorsehen eines weiteren männlichen Elements an einer aus der weiteren Fügefläche und der jeweiligen weiteren komplementären Fügefläche und eines weiteren weiblichen Elements an der anderen aus der weiteren Fügefläche und der weiteren komplementären Fügefläche, wobei die weiteren männlichen und weiblichen Elemente jedes dazu eingerichtet sind, zusammenzupassen, um jede weitere Fügefläche und die jeweilige weitere komplementäre Fügefläche in gegenseitigem Eingriff miteinander in dem einstückigen Dentalgerüst zusammenzuhalten;
In-Eingriff-Bringen jeder weiteren Fügefläche und jeweiligen weiteren komplementären Fügefläche mit ihren zusammengepassten männlichen und weiblichen Elementen; und
Zusammenschweißen der weiteren Fügefläche und ihrer jeweiligen weiteren komplementären Fügefläche durch Ultraschallschweißen.

13. Verfahren nach Anspruch 12, wobei das Polymermaterial in der Zusammensetzung jedes weiteren Abschnitts das gleiche Polymermaterial ist wie das Polymermaterial in der Zusammensetzung der ersten und zweiten Abschnitte.

14. Verfahren nach einem vorhergehenden Anspruch, wobei das Ultraschallschweißen unter Verwendung einer Sonotrode unter manueller oder Computersteuerung ausgeführt wird.

15. Einstückiges Dentalgerüst, das wenigstens zwei miteinander verbundene Abschnitte (1, 2) eines Dentalgerüsts (8) umfasst, wobei jeder Dentalgerüstabschnitt unabhängig aus einer Zusammensetzung gebildet ist, die ein Polymermaterial umfasst,
wobei das Polymermaterial eine sich wiederholende Einheit der Formel (I) umfasst: 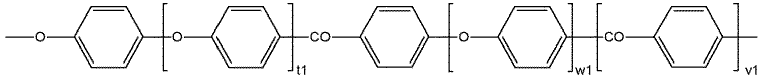
wobei t1 und w1 unabhängig für 0 oder 1 stehen und v1 für 0, 1 oder 2 steht; und
wobei jeder Abschnitt an einer Fügestelle mit wenigstens einem anderen Abschnitt verbunden ist;
wobei jede Fügestelle ein männliches Element (5) an einer ersten Fügefläche (3) eines Abschnitt und ein weibliches Element (6) an einer zweiten Fügefläche (4) eines benachbarten Abschnitts umfasst;
wobei die jeweiligen männlichen und weiblichen Elemente an der Fügestelle dazu eingerichtet sind, zusammenzupassen, um die ersten und zweiten Abschnitte mit den ersten und zweiten Fügeflächen in gegenseitigem Eingriff miteinander an der Fügestelle zusammenzuhalten; und
wobei die ersten und zweiten Fügeflächen an der Fügestelle wenigstens teilweise zusammengeschmolzen sind.

## Revendications

1. Procédé de raccordement de première et seconde parties (1, 2) d'une armature dentaire (8) pour former une armature dentaire intégrée,
dans lequel les première et seconde parties (1, 2) de l'armature dentaire (8) sont chacune indépendamment formées d'une composition comprenant un matériau polymère,
dans lequel le matériau polymère comprend un motif de répétition de formule (I) : 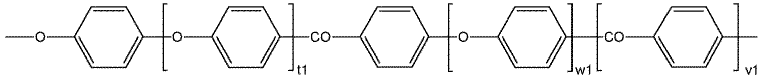
dans lequel t1 et w1 représentent indépendamment 0 ou 1 et v1 représente 0, 1 ou 2 ;
le procédé comprenant :
la fourniture d'un élément mâle (5) sur une première surface de joint (3) de la première partie et un élément femelle (6) sur une seconde surface de joint (4) de la seconde partie, dans lequel les éléments mâle et femelle sont disposés pour s'apparier afin de maintenir les première et seconde parties ensemble avec les première et seconde surfaces de joint mutuellement en prise dans l'armature dentaire intégrée ;
la mise en prise des première et seconde surfaces de joint avec les éléments mâle et femelle accouplés l'un à l'autre ; et
le soudage des première et seconde surface de joint l'une à l'autre par soudage par ultrasons.

2. Procédé selon la revendication 1, dans lequel le soudage des première et seconde surfaces de joint l'une à l'autre par soudage par ultrasons comprend le soudage des éléments mâle et femelle l'un à l'autre par soudage par ultrasons.

3. Procédé selon la revendication 1 ou la revendication 2, dans lequel le matériau polymère dans la composition de la première partie est le même matériau polymère que le matériau polymère dans la composition de la seconde partie.

4. Procédé selon la revendication 1 ou la revendication 2, dans lequel le matériau polymère dans la composition de la première partie est un matériau polymère différent du matériau polymère dans la composition de la seconde partie.

5. Procédé selon l'une quelconque des revendications précédentes, dans lequel t1 = 1, v1 = 0 et w1 = 0 pour le matériau polymère dans la composition des première et/ou seconde parties.

6. Procédé selon l'une quelconque des revendications précédentes, dans lequel les première et seconde surfaces de joint sont disposées pour entraver la rotation de la seconde partie autour de l'élément mâle de la première partie lorsque les première et seconde surfaces de joint sont en prise.

7. Procédé selon la revendication 6, dans lequel deux éléments mâles ou plus sont fournis sur la première surface de joint et deux éléments femelles ou plus sont fournis sur la seconde surface de joint de la seconde partie, dans lequel les éléments mâle et femelle sont disposés pour s'accoupler l'un à l'autre pour maintenir les première et seconde parties l'une à l'autre avec les première et seconde surfaces de joint mutuellement en prise dans l'armature dentaire intégrée.

8. Procédé selon l'une quelconque des revendications précédentes, dans lequel la première partie est une partie de remplacement pour la réparation d'une armature dentaire cassée et la seconde partie est une partie restante de ladite armature dentaire cassée.

9. Procédé selon la revendication 8, dans lequel l'élément femelle est formé en formant un trou dans la partie restante avant d'amener les première et seconde surfaces de joint en prise avec les éléments mâle et femelle accouplés l'un à l'autre.

10. Procédé selon la revendication 8 ou la revendication 9, dans lequel la seconde surface de joint comprend une surface de fracture de la partie restante et la première surface de joint est profilée pour entrer en prise avec la surface de fracture lorsque les première et seconde faces de joint sont amenées en prise.

11. Procédé selon l'une quelconque des revendications 1 à 7, comprenant la formation des première et seconde parties à partir de premier et second moules préparés à partir d'empreintes de la bouche d'un patient.

12. Procédé selon l'une quelconque des revendications précédentes, dans lequel l'armature dentaire intégrée comprend au moins une partie supplémentaire d'armature dentaire qui est indépendamment formée d'une composition comprenant un matériau polymère,
dans lequel le matériau polymère comprend un motif de répétition de formule (I) : 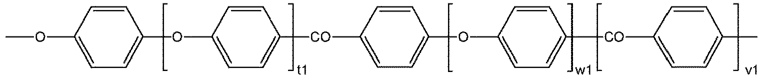
dans lequel t1 et w1 représentent indépendamment 0 ou 1 et v1 représente 0, 1 ou 2 ;
le procédé comprenant :
la fourniture d'au moins une surface de joint supplémentaire sur chaque partie supplémentaire qui est disposée pour venir en prise avec une surface de joint complémentaire supplémentaire respective sur la première, la seconde ou une autre partie de l'armature dentaire intégrée,
la fourniture d'un élément mâle supplémentaire sur une surface parmi la surface de joint supplémentaire et la surface de joint complémentaire supplémentaire respective, et un élément femelle supplémentaire sur l'autre surface parmi la surface de joint supplémentaire et la surface de joint complémentaire supplémentaire, dans lequel les éléments mâle et femelle supplémentaires sont chacun disposés pour s'accoupler l'un à l'autre pour maintenir chaque surface de joint supplémentaire et la surface de joint complémentaire supplémentaire respective ensemble, mutuellement en prise dans l'armature dentaire intégrée ;
la mise en prise de chaque surface de joint supplémentaire et surface de joint complémentaire supplémentaire respective avec leurs éléments mâle et femelle accouplés l'un à l'autre ; et
le soudage de la surface de joint supplémentaire et de sa surface de joint complémentaire supplémentaire respective l'une à l'autre par soudage par ultrasons.

13. Procédé selon la revendication 12, dans lequel le matériau polymère dans la composition de chaque partie supplémentaire est le même matériau polymère que le matériau polymère dans la composition des première et seconde parties.

14. Procédé selon l'une quelconque des revendications précédentes, dans lequel le soudage par ultrasons est effectué au moyen d'une sonotrode sous commande manuelle ou informatisée.

15. Armature dentaire intégrée comprenant au moins deux parties interconnectées (1,2) d'armature dentaire (8), dans laquelle chaque partie d'armature dentaire est indépendamment formée d'une composition comprenant un matériau polymère,
dans laquelle le matériau polymère comprend un motif de répétition de formule (I) : 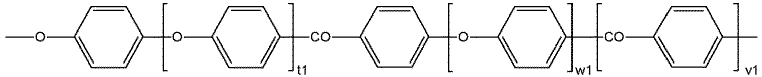
dans laquelle t1 et w1 représentent indépendamment 0 ou 1 et v1 représente 0, 1 ou 2 ; et
dans laquelle chaque partie est reliée à au moins une autre partie au niveau d'un joint ;
dans laquelle chaque joint comprend un élément mâle (5) sur une première surface de joint (3) d'une partie et un élément femelle (6) sur une seconde surface de joint (4) d'une partie adjacente ;
dans laquelle les éléments mâle et femelle respectifs au niveau du joint sont disposés pour s'accoupler l'un à l'autre pour maintenir les première et seconde parties ensemble avec les première et seconde surfaces de joint mutuellement en prise au niveau du joint ; et
dans laquelle les première et seconde surfaces de joint sont au moins partiellement fusionnées l'une à l'autre au niveau du joint.
